(19) **Europäisches Patentamt / European Patent Office / Office européen des brevets**

(11) **EP 1 357 683 B1**

(12) **EUROPEAN PATENT SPECIFICATION**

(45) Date of publication and mention
of the grant of the patent:
**13.05.2009 Bulletin 2009/20**

(51) Int Cl.:
***H04B 10/12*** *(2006.01)*

(21) Application number: **03251825.0**

(22) Date of filing: **24.03.2003**

(54) **Hybrid fibre-radio system**

Hybrides Faser-Funksystem

Système hybride fibre-radio

(84) Designated Contracting States:
**DE FR GB SE**

(30) Priority: **25.04.2002 KR 2002022704**

(43) Date of publication of application:
**29.10.2003 Bulletin 2003/44**

(73) Proprietor: **SAMSUNG ELECTRONICS CO., LTD.**
**Suwon-City, Kyungki-do (KR)**

(72) Inventor: **Kim, A-jung**
**Yongsan-gu,**
**Seoul (KR)**

(74) Representative: **Greene, Simon Kenneth**
**Elkington and Fife LLP**
**Prospect House**
**8 Pembroke Road**
**Sevenoaks,**
**Kent TN13 1XR (GB)**

(56) References cited:
**EP-A- 0 845 878**

• **NOEL L ET AL: "120MBIT/S QPSK RADIO-FIBRE TRANSMISSION OVER 100KM OF STANDARD FIBRE AT 60GHZ USING A MASTER/SLAVE INJECTION-LOCKED DFB LASER SOURCE" METAL FINISHING, ELSEVIER SCIENCE PUBLISHING, NEW YORK, NY, US, vol. 94, no. 9, 26 September 1996 (1996-09-26), pages 1895-1897, XP000637896 ISSN: 0026-0576**

**Description**

The present invention relates to a method and apparatus for allowing duplex communication by generating an optical millimeter-wave signal in a hybrid fiber-radio system.

Since existing wireless frequency resources are getting exhausted due to congestion of Internet uses for moving picture services and an increase in wireless access, fourth-generation wireless communication for providing improved broadband services is increasingly required. Accordingly, millimeter-wave communication using a frequency having a band of 30-300 GHz, which was developed in limited fields such as military and satellite, has been researched and developed as a broadband communication system in various ways.

Even for communication using millimeter-wave signals, it is preferable that a fundamental communication network employs wired communication through optical fiber because the fundamental communication network must function as a communication line regardless of external changes. In addition, employing the wired communication through broadband and low-loss optical fiber is advantageous in utilizing an existing optical fiber fundamental communication network. In technical terms, since optical amplifiers are commonly used, broadband optical signals can be easily amplified. Using optical amplifiers is also more economical than using electrical amplifiers. Moreover, with development of optical amplifiers, a wavelength division multiplexing (WDM) mode, in which signals are transmitted through a plurality of channels at a wavelength of 1550 nm with minimum optical loss, has been put into practical use. As a result, transmission capacity remarkably increases, so communication methods using optical fiber and the economicality and usibility of communication networks have been reconsidered. In this trend of technological development, combining transmission of millimeter-wave signals through optical fiber with the WDM mode will make an important chance to be able to simultaneously accomplish the advantages of millimeter-wave technique and optical communication.

As described above, wireless communication technology using millimeter waves is fundamental to the fourth-generation wireless communication for broadband communication after IMT-2000. In order to overcome limitations in, for example, transmission distance, and satisfy demands for a broad band in wireless radio system, association with an existing broadband wired communication network is needed. Accordingly, a technique of connecting optical fiber to millimeter-wave wireless apparatuses and a technique of generating optical millimeter waves are essentially required.

In a hybrid fiber-radio system, a method of generating and transmitting optical millimeter waves is remarkably advantageous in that a central station forms a desired optical millimeter-wave source using light and transmits the optical millimeter wave to a remote base station, which simply has an optical-to-electrical (O/E) converter and an antenna. According to the method, loads on a large number of remote base stations on a communication network in a pico-cell concept can be reduced. Consequently, the method is economical and efficient. By giving the central station some amount of load such as a channel allocation control function, a centralized system can be implemented. Since waves are transmitted without modulation or demodulation, a wireless base station can easily prepare the universality for a variety of wave formats so that the wave formats can be flexibly changed or established. In addition, channel allocation control can be possible, hand-over control can be simplified and advanced, and a capacity to accommodating subscribers can be increased. Since many functions necessary to control mobile communication antennas are concentrated on the central station, problems of the selection of an antenna's position and maintenance can be overcome.

As described above, with advantages of reduction of system construction expenses and efficient system construction and management due to centralization of equipment, it is attempted to apply an optical millimeter-wave oscillating and transmitting method to mobile communication or a wireless subscriber network such as a broad-wireless local loop (B-WLL).

A major problem in conventional high-frequency optical fiber-radio transmission systems is conversion into a carrier frequency. Expensive equipment is needed for up/down conversion between radio frequency and carrier frequency. Here, a system option may be baseband signal transmission, intermediate frequency (IF) signal transmission, and optical millimeter-wave transmission according to an optical carrier frequency.

More specifically, there are three methods. In a first method, a baseband is directly transmitted to a remote base station using Intensity Modulation Direct Detection (IMDD), and the remote base station generates and processes a millimeter wave like in an existing method. In a second method, a low radio frequency signal is directly modulated with an electrically modulated signal in a laser and is then transmitted. Then, the remote base station simply performs O/E conversion and up conversion without performing modulation. In a third method, a central station forms a desired millimeter-wave source using light, modulates the optical millimeter wave, and transmits the modulated optical millimeter wave, and a remote base station simply includes an O/E converter and an antenna.

The first and second methods are used in wireless mobile communication at present. They are simple with respect to low radio frequency. However, with respect to high frequency, the methods require many sub-wireless frequency oscillators to perform up/down conversion on radio frequency. Accordingly, the methods are complicated and need to provide appropriate equipment for full synchronous digital hierarchy (SDH) to a remote base station. As frequency increases, efficiency of direct modulation decreases. In addition, for high-radio frequency communication, a remote base station requires an expensive high-frequency mixer and local oscillator. If it is considered that a large number of base stations exist because the size of each cell is small, it cannot be expected to construct economical system according to the two methods.

In the third method, a central station is connected to a first remote base station through optical fiber, and a radio signal received by the remote base station is transmitted to the central station with a wave format maintained. In addition, some load such as a channel allocation control function is given to the central station, thereby centralizing a system. Since a wave is transmitted as it is without being modulated or demodulated, a remote base station can easily prepare the universality for a variety of wave formats so that the wave formats can be flexibly changed and established. Moreover, channel allocation control can be possible, hand-over control can be simplified and advanced, and a capacity to accommodating subscribers can be increased.

However, in case of upstream transmission of an optical millimeter wave in the third method, it is necessary to generate an optical millimeter wave in a remote base station. Accordingly, it is difficult to apply the third method to duplex communication.

A radio-fiber transmission system is described in "120 Mbit/s QPSK radio-fibre transmission over 100km of standard fibre at 60 GHz using a master/slave injection-locked DFB laser source", Noel L et al, Electronic Letters 32 (1996) pages 1895-1897.
A duplex system is described in EP 0 845 878.

In an aspect there is provided an apparatus for duplex communication in a hybrid fiber-radio system according to claim 1.
The present invention aims to provide an apparatus and method for enabling duplex communication by generating an optical millimeter signal in an optical millimeter oscillating transmission mode of a hybrid fiber-radio system. The present invention may provide an efficient method in which frequency conversion can be performed on radio frequency, one of generated modes (a group of pulses that are transmitted without disappearing due to generation of a wave having the same phase as an optical pulse when the optical pulse collides to a clad wall at a particular angle) is divided into a frequency using a diplexer, and the divided frequency is used for down conversion during reverse communication, thereby removing the use of an expensive high-frequency mixer or local oscillator.
In another aspect, there is provided an apparatus for duplex communication in a hybrid fiber-radio system according to claim 2.

The features and advantages of the present invention will become more apparent by describing in detail preferred embodiments thereof with reference to the attached drawings in which:

FIG. 1 is a diagram of a central station according to an embodiment of the present invention;
FIG. 2 is a remote base station according to an embodiment of the present invention;
FIG. 3 is a flowchart of a transmitting method according to an embodiment of the present invention;
FIG. 4 is a flowchart of a receiving method according to an embodiment of the present invention;
FIG. 5 is a diagram of the spectrum of optical signals according to the present invention;
FIG. 6 is a diagram of the spectrum of radio frequency signals according to the present invention;
FIG. 7 shows the result of testing radio frequency signals according to the present invention and is a diagram of the outputs of a Fabry-Perot (F-P) interferometer, and
FIG. 8 shows the result of testing radio frequency signals according to the present invention and is a diagram of the outputs of a spectrum analyzer.

Hereinafter, embodiments of the present invention will be described in detail with reference to the attached drawings.

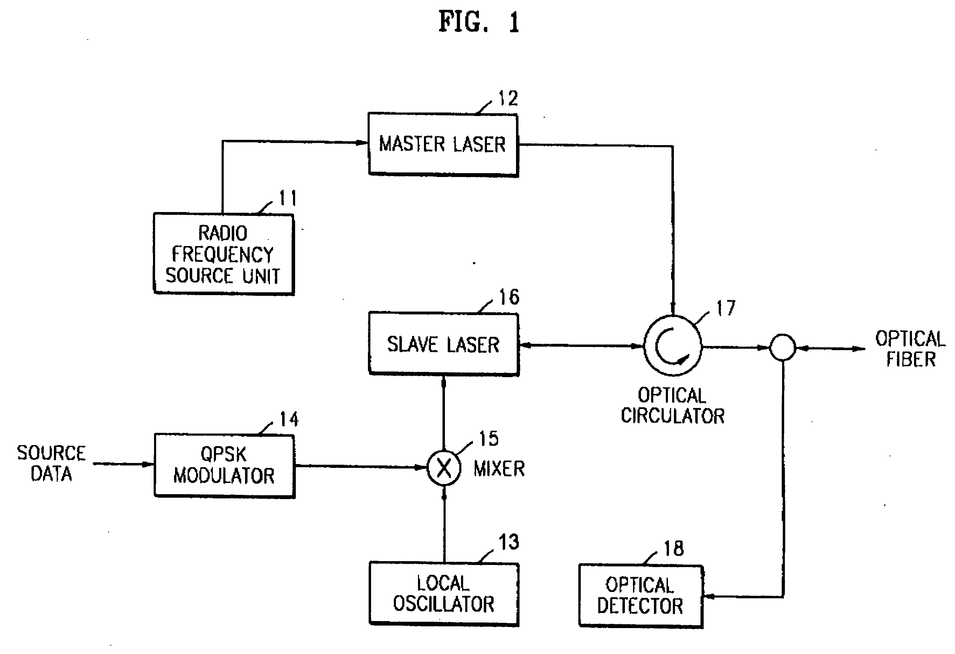

FIG. 1 is a diagram of a central station in a hybrid fiber-radio system for duplex communication. The central station includes a master laser 12 and a slave laser 16. A radio frequency source unit 10 generates an intermediate radio frequency. It is connected to the master laser 12 and modulates a master laser diode using direct modulation. Here, an optical signal output from the master laser 12 is applied to the slave laser 16 by the routing operation of an optical circulator 17, thereby modulating a slave laser diode. A mixer 15 mixes a modulated signal output from a quadrature phase shift keying (QPSK) modulator 14 and a signal generated from a local oscillator 13. QPSK is a digital frequency modulating technique in which two bits of 0 and 1 of a digital signal are packed and then transmitted at one of four phases of a carrier wave. In this invention, QPSK is used to modulate source data, which a user wants to transmit through a fiber-radio system, to a format that can be applied to the present invention. The mixed signal having a baseband is applied to the slave laser 16 to modulate the slave laser diode. By modulating the slave laser diode, a signal generated from the slave laser 16 is composed of a non-data mode signal induced from the radio data source signal and a data mode signal induced from the user source data and is transmitted to optical fiber by the routing operation of the optical circulator 17. In other words, an optical signal generated from the master laser 12 is fed back to the slave laser 16 through the optical circulator 17. Instead of the optical circulator 17, a coupler having an isolator can be used as a device for applying an optical signal from the master laser 12 to the slave laser 16. The slave laser 16 for the above operation may be manifested as an FP-LD or DFB-LD that is packaged without an internal isolator so that an external optical signal can be applied thereto. A DFB-LD internally isolated from the master laser 12 or a selective FP-LD may be used. In particular, since a duplex apparatus must be provided in order to provide an additional service such as Internet, an upward transmission module enabling the transmission of an upward signal must be installed to a transmitter. A laser diode (LD) is used as the upward transmission module and is usually divided into an FP type and a DFB type. An FP-LD is used when only digital signals used in, for example, Internet, is forwarded while a DFB-LD is used to forward analog broadcasting signals, for example, broadcasted live from the scene.

In addition, the central station includes a light detector 18 which detects a reception signal transmitted from the optical fiber.

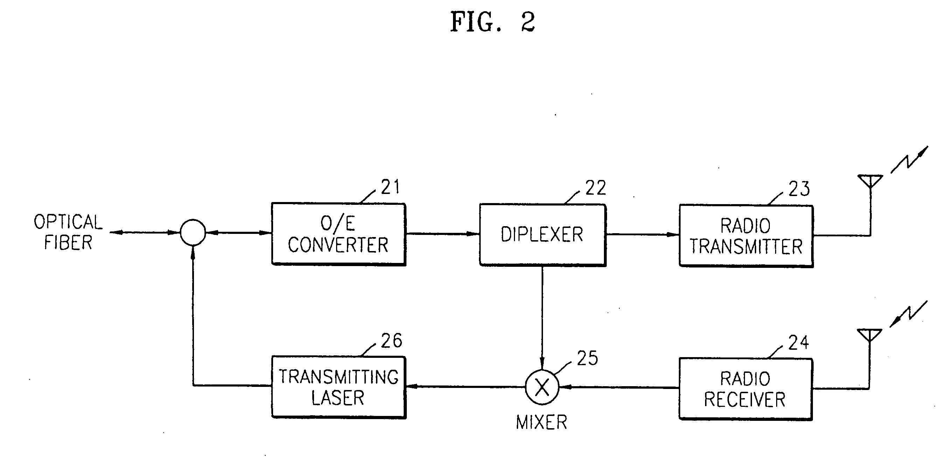

FIG. 2 is a remote base station in the hybrid fiber-radio system for duplex communication. An optical signal generated from the slave laser 16 passes through the optical fiber and is received by the remote base station. Then, the optical signal is converted into an electrical transmission signal by an optical-to-electrical (O/E) converter 21 and is then divided into a non-data mode signal containing a radio frequency source signal and a data mode signal containing user source data by a diplexer 22. The data mode signal is transmitted to a radio transmitter 23. The radio transmitter 23 converts the data mode signal into a radio transmission signal and broadcast it.

In uplink communication, a radio receiver 24 converts a signal received through an antenna into an electrical reception signal. The mixer 25 mixes the electrical reception signal and the non-data mode signal output from the diplexer 22. Here, the non-data mode signal instead of a local oscillator is used as a frequency shifting mixing signal during down conversion. The mixed intermediate frequency (IF) signal is transmitted to a transmitting laser 26 corresponding to a transmitter, is then modulated, and is then transmitted to the light detector 18 corresponding to a receiver in the central station through the optical fiber. Optical signal division for uplink and downlink can be achieved using a wavelength division multiplexing (WDM) coupler. WDM is to simultaneously transmit different wavelengths over the same optical fiber to increase transmission capacity. The WDM coupler branches an optical signal into a plurality of optical fibers or combines optical signals into one and is usually used for an optical amplifier or WDM transmission system.

The radio frequency source unit 11 at the front end in the hybrid fiber-radio system for duplex communication is provided to stabilize a signal. The light detector 18 using a direct detection method complying with a square law detects a master laser signal, a slave laser signal, and a four-wave mixing (FWM) signal and also measures beat signals that are generated from beating occurring between these signals. Here, FWM is that undesirable optical signals are generated by mixing of optical signals that are transmitted through a single optical fiber. The beat signals have different sources, and thus coherency is weak. Accordingly, they have low stability or purity. In order to stabilize a beat signal and reduce phase noise, the master laser 12 is connected to the radio frequency source unit 11 so that a signal can be directly and electrically modulated. In this operation, side bands are formed around a lasing frequency due to frequency modulation (FM) in the master laser 12, and these modes are injected into the cavity of a slave laser 16 and combined with the slave laser 16, thereby provoking a locking effect in which stabilization is achieved by coherency. As a result, as well as the basic mode of the slave laser 16, satellite modes including FWM are transferred overlapping with the side bands of the master laser 12 so that a signal with low wave motion and phase noise can be obtained.

The present invention is based on the facts that FM side bands generated at a laser during direct modulation using a radio frequency source signal are used to lock another laser to thus generate a high frequency, that a band shifted signal that is generated by mixing an IF generated from a local oscillator with a QPSK modulated signal containing user source data is transmitted as a downlink transmission signal, and that a modulated signal from a radio frequency source is diplexed so that it is used for down conversion instead of a local oscillator when an uplink signal is transmitted.

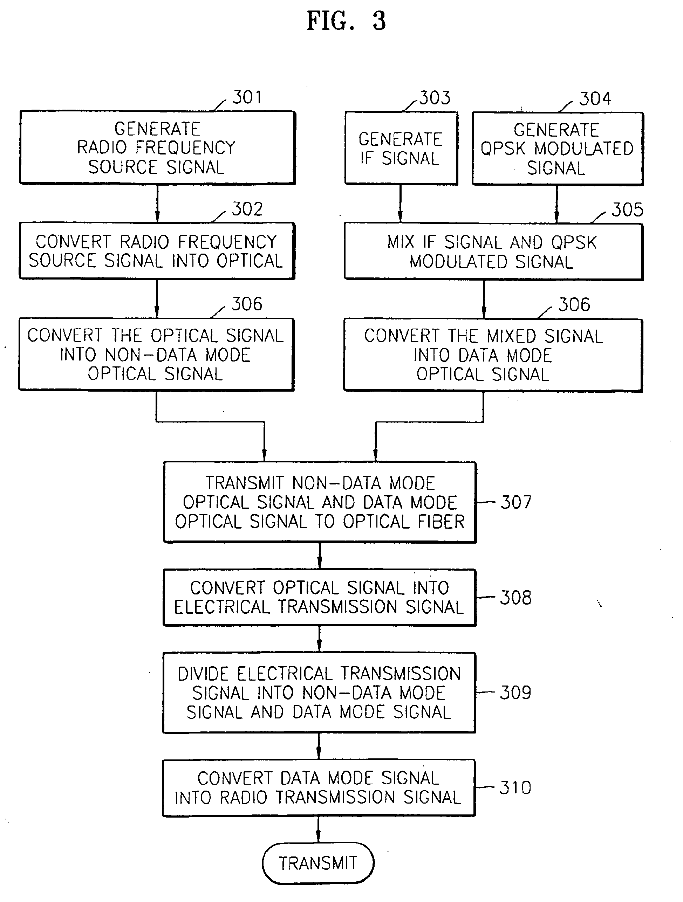

FIG. 3 is a flowchart of a transmitting method which is performed throughout a central station, an optical fiber, and a remote base station during duplex fiber-radio communication. A central station generates a radio frequency source signal acting as a stable guide frequency in step 301. A master laser converts the radio frequency source signal into an optical signal in step 302. In the meantime, a local oscillator generates an IF signal in step 303. User source data is converted into a QPSK modulated signal in step 304. The IF signal and the QPSK modulated signal are mixed in step 305. Next, a slave laser converts the optical signal into a non-data mode optical signal and converts the mixed signal into a data mode optical signal in step 306. The non-data mode optical signal and the data mode optical signal are transmitted to an optical fiber by the routing operation of an optical circulator in step 307. The optical signal received through the optical fiber is converted into an electrical transmission signal in step 308. A diplex divides the electrical transmission signal into s data mode signal containing the user source data and s non-data mode signal containing the radio frequency source signal in step 309. The data mode signal is converted into a radio transmission signal and is then transmitted wirelessly in step 310.

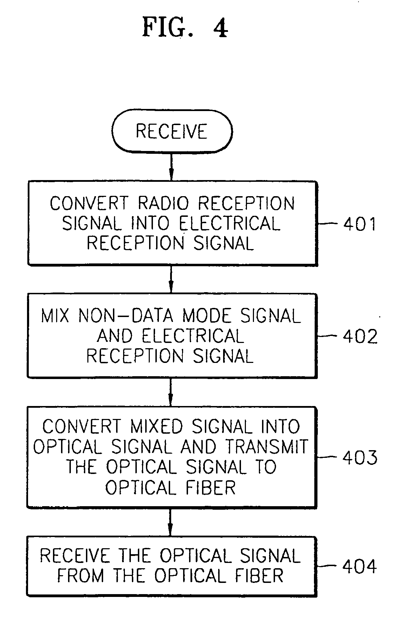

FIG. 4 is a flowchart of a receiving method during duplex fiber-radio communication according to an embodiment of the present invention. A signal wirelessly received through an antenna is converted into an electrical reception signal in step 401. An existing non-data mode signal containing a radio frequency source signal, which has been obtained by the dividing operation of a diplexer, is mixed with the electrical reception signal in step 402. A transmission laser converts the mixed signal into an optical signal and transmits the optical signal to an optical fiber in step 403. A light detector receives the optical signal from the optical fiber in step 404.

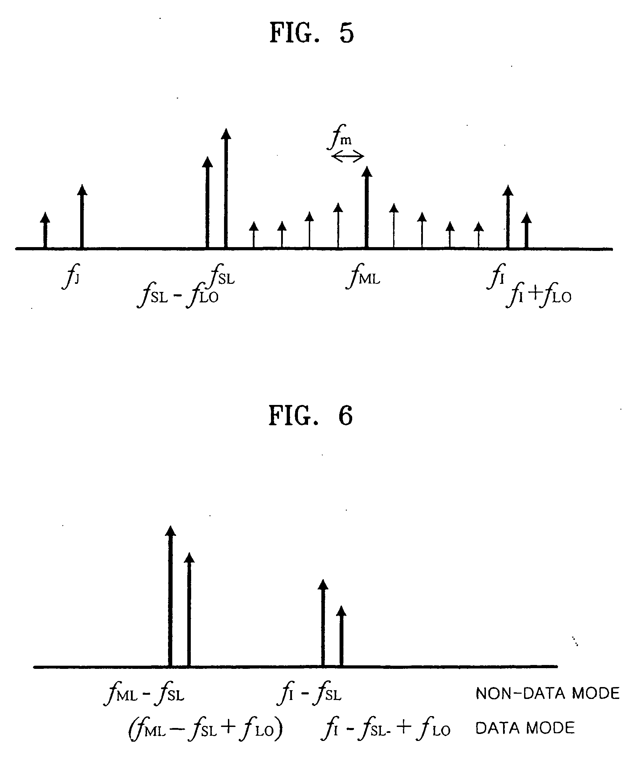

FIG. 5 is a diagram of the spectrum of optical signals according to the present invention. FIG. 6 is a diagram of the spectrum of radio frequency signals according to the present invention.

As described above, in a master laser to which a radio frequency source $f_m$ is connected so that modulation is electrically and directly performed, FM side bands are formed centering on a lasing frequency at intervals of $f_m$ as the result of frequency modulation. When a signal of the master laser is applied to a slave laser that targets one of these modes, if the lasing frequency of the slave laser is within the locking range of these modes, the modes are injected into the cavity of the slave laser and combined with the slave laser, thereby provoking a locking effect.

Here, if the slave laser is modulated by mixing QPSK modulated data with an IF local oscillator, a mode containing data information is generated in an area that is shifted from a frequency $f_{SL}$ of the slave laser by $f_{LO}$. When these signals are transmitted to a receiver, beat signals occurring due to beating are detected in a light detector. These beat signals are induced from different sources but have coherency regarding locking so that stability or purity can be increased. The detected radio frequency signals include a non-data mode signal of $f_{ML}$ ! $f_{SL}$ and a QPSK modulated data mode signal of $f_{ML}$ ! $f_{LO}$. The data mode signal is sent to a radio transmitter, is then converted into a radio transmission signal, and is then distributed. The non-data mode signal remains after being divided by a diplexer.

In uplink communication, a signal is received through an antenna and is converted into an electrical reception signal. The electrical reception signal is mixed with the non-data mode signal of $f_{ML}$ ! $f_{SL}$ so that the band is down converted. Thereafter, the down-converted signal modulates a transmitting laser corresponding to a downlink transmitter. An optical signal generated as the result of the modulation is transmitted through an optical fiber and is received by a light detector corresponding to a downlink receiver.

As described above, a high radio frequency can be generated by beating among basic modes. However, higher radio frequency can be generated using beating among the basic modes and a satellite mode such as FWM.

A continuous wave is generated by adjusting operating temperature or laser diode bias so that the lasing frequency of the master laser is sufficiently higher than the lasing frequency of the slave laser to achieve positive detuning ($f_{ML} > f_{SL}$). When the continuous wave is applied to the slave laser, almost pure FWM conjugate signals having frequencies of various combinations of $f_{ML}$ and $f_{SL}$ are generated due to non-linearity of a semiconductor laser. Here, since a photon density within the cavity of the slave laser vibrates at a frequency of about a difference in lasing frequency between the master laser and the slave laser, beat signals among the FWM conjugate signals are detected in a direct detector complying with a square law.

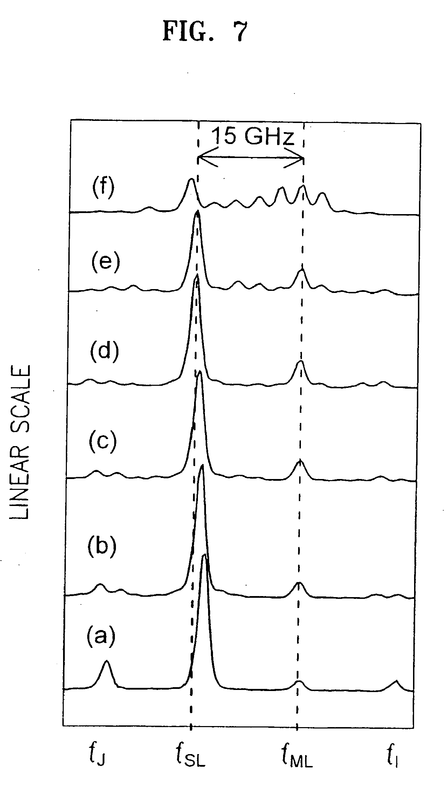

FIG. 7 is a graph of corresponding FWM conjugate peaks occurring when a continuous wave generated from the master laser according to the above method interacts with the continuous wave of the slave laser. A difference in frequency between FWM conjugates is the same as a difference in frequency between the master laser and the slave laser. If the light of the master laser is applied to the cavity of the slave laser, the carrier density of the slave laser decreases, resulting in a red shift in which the frequency $f_{SL}$ of the slave laser is lowered. Here, the master laser functions as a pump laser provoking FWM rather than a master laser for locking. Accordingly, beat signals abandoned from the two different light sources are unstable signals with an excessive wave motion or phase noise. In the test, a frequency wave motion of several tens of MHz was measured with respect to the beat signals. Accordingly, when locking was performed using side bands which were generated by electrically modulating the master laser with a radio frequency in order to achieve stabilization through locking between pure FWM modes, the side bands of the master laser were injected into the slave laser so that $f_{SL}$ which was not on the extension of the side bands was red shifted. As a result, the $f_{SL}$ shifted to a position $f_{SL}$' corresponding to a multiple of a radio frequency modulation frequency applied centering on $f_{ML}$ and was locked. As a radio frequency modulation power Pm increased, the degree of red shifting increased. Consequently, the intensity of locking by the side band combination also increased.

When $f_{SL}$ is locking-shifted to $f_{SL}$' and locked, corresponding FWM conjugates are also shifted to $f_i'$ and $f_j'$, respectively, and are locked to each other. As $f_{SL}$ is shifted, a difference between abandoned FWM conjugates is adjusted to a multiple of a modulation frequency, $f_b'$ Accordingly, all FWM conjugates are locked to one another, thereby generating beat signals with low phase noise and stable frequency.

In this situation, if QPSK modulated data is combined to an IF local oscillator so as to modulate a slave laser, a mode containing data information is generated in an area that is shifted from a frequency $f_i$ of an FWM mode by $f_{LO}$. Accordingly, an non-modulated radio frequency signal of $f_i$ ! $f_{ML}$ is divided by a diplexer, is then mixed with an uplink transmission signal, and is then used to down convert a carrier frequency. A QPSK modulated radio frequency signal of $f_i + f_{LO}$ ! $f_{ML}$ is transmitted to an antenna module, is then converted into a radio signal, and is then distributed. With such method, duplex high-frequency communication system can be established.

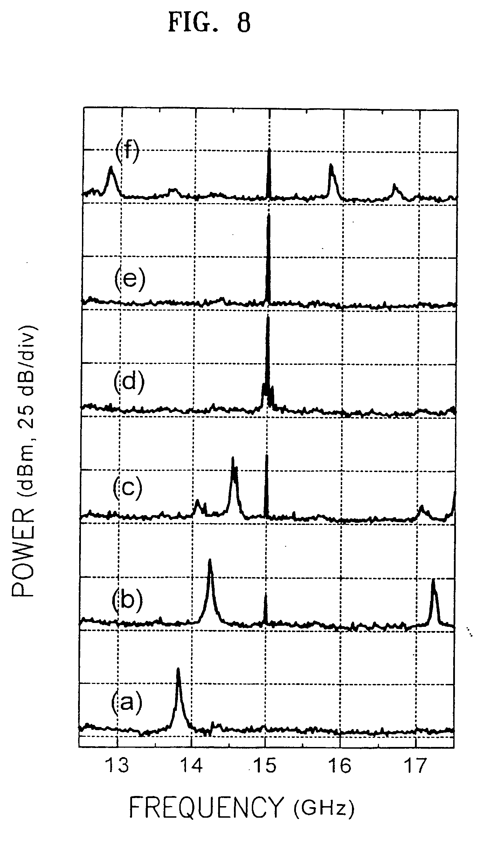

FIGS. 7 and 8 show the results of tests verifying the improvement of the quality of radio frequency signals generated in, for example, FWM mode. FIG. 7 shows the results of measuring the outputs of a slave laser, into which light of a master laser is injected, using a Fabry-Perot (F-P) interferometer. FIG. 8 shows the results of measuring the outputs of the slave laser using a radio frequency spectrum analyzer. In FIGS. 7 and 8,(a) shows a result obtained when radio frequency modulation was not performed, and (b), (c), (d), (e), and (f) shows results obtained when modulation powers Pm were 5 dBm, 8 dBm, 10 dBm, 12 dBm, and 16 dBm, respectively.

In the spectrum (a) of a continuous wave that was output from the slave laser to which the master laser applied a continuous wave shown in FIGS. 7 and 8, beat signals were detected in the master laser and the slave laser at corresponding FWM conjugate peaks, and near at a frequency of 13.8 GHz.

When a modulation frequency $f_m$ of 3 GHz was modulated with radio frequency so as to increase the modulation power Pm, $f_{SL}$ got lowered as the modulation power Pm increased, as shown in (b) and (c) of FIG. 7.

Such excessive red shift of the lasing frequency of the slave laser resulting from an increase of the modulation power Pm can be verified by the increases of beat signal frequencies, as shown in (b) and (c) of FIG. 8. Due to this electrical modulation, other beat frequencies were detected displaced from beat signals with respect to frequencies of a 15 GHz level by the 3 GHz modulation frequency $f_m$. The 15 GHz-level signals correspond to higher order harmonics of the modulation frequency $f_m$. Since these beat frequency modes were shown without overlapping with the 15 GHz-level signal modes in (b), (c), and (f), it can be inferred that 15 GHz-level beat signals were not locked and were simply high order harmonics corresponding to a multiple of the modulation frequency $f_m$.

It is analyzed that side modes near bit signals shown in (c) and (f) of FIG. 8 were caused by reverse reflection occurring on a fiber pigtail within the slave laser not having an internal isolator.

As the modulation power Pm were increased more, the side band modes of the slave laser were red shifted and injection-locked to the side band modes of the master laser, as shown in (d) and (e) of FIG. 7. As a result, $f_{SL}$ was positioned at 15 GHz that is a multiple of the 3 GHz modulation frequency $f_m$.

In FIG. 8,(d) and (e) show sharply injection-locked FWM beat signals that are stable and have little phase noise without other side modes around desirable beat signals. In the case (e) shown in FIG. 8, a phase noise of -96 dBc/Hz was detected at a spectrum position having an offset of 100 kHz from 15 GHz, which was very satisfactory result. In addition, in (a) of FIG. 8, a line width of an unlocked FWM beat signal was 4 MHz while a line width of a locked beat signal was restricted only by the resolution of the radio frequency spectrum analyzer. Accordingly, it can be concluded that a method according to the present contributes to the reduction of a line width of a signal. A remarkable increase of the intensity of the beat signal means that the beat signal was not simply the high order harmonic of the modulation frequency $f_m$ but was the result of locking. It can be seen that as long as the side bands of the slave laser were locked, even if the modulation power Pm was increased, $f_{SL}$ was not shifted. The slave laser maintained a locking operation when the modulation power Pm is in a range of 10-13.5 dBm. When the modulation power Pm increased over 13.5 dBm, the slave laser was not locked but red shifted, as shown in (f) of FIGS. 7 and 8.

The above-described embodiments of the present invention can be realized as a program that can be executed in a computer. The program can be recorded on a computer readable recording medium and can be executed in a universal digital computer. The computer readable recording medium may be a storage medium such as magnetic storage medium (e.g., a ROM, a floppy disc, and a hard disc), an optical medium (e.g., a CD-ROM and DVD), or carrier waves (for example, transmitted through Internet).

According to the present invention, when an optical millimeter/micro wave is transmitted in a fiber-radio transmission system, a satellite side mode among signals generated using two lasers and a cheap IF local oscillator is diplexed and is then converted into an upstream signal, and duplex communication can be accomplished by using the upstream signal. By using a diplexer instead of expensive high-frequency mixer or local oscillator, an economical effect can be achieved. In addition, the present invention stabilizes a light source, reduces signal deterioration by decreasing non-linearity, and allows radio frequency conversion when a variable frequency laser is used.

In addition to the above-described fundamental effects, the present invention provides a simple and efficient duplex transmission system which does not need a plurality of high-frequency sub IF oscillators or in a remote base station, thereby increasing variability of a broadband radio communication system such as a broad-wireless local loop (B-WLL). The present invention can be widely applied to industrial fields. When a satellite mode such as an FWM mode is used, the present invention can provide a broadband high radio frequency signal for a millimeter-wave frequency, thereby stabilizing a ultrahigh-frequency transmission system. Since the present invention provides a wide stable locking range of 30 GHz offset during feeding of a high power master laser, control and tuning can be easily performed. In addition, the present invention contributes to the stabilization of a light source by reducing the phase noise and frequency fluctuation of the light source. The present invention also improves a third order inter modulation distortion (IMD) so as to increase a spurious-free dynamic range (SFDR), thereby accomplishing high-quality communication. Since a chirp of the light source is reduced, transmission dispersion decreases so that signal deterioration during transmission can be reduced. Since a load on an antenna of a remote base station can be reduced so that many base stations or mobile devices on a communication network in a pico-cell concept can be miniaturized and simplified, thereby reducing cost. Since a wireless base station can easily prepare universality for a variety of wave formats so that the wave formats can be flexibly changed or established. Since many functions and facilities necessary to control mobile communication antennas are concentrated on a central station, problems of the selection of an antenna's position and maintenance can be overcome. In addition, channel allocation control can be possible, hand-over control can be simplified and advanced, and a capacity to accommodating subscribers can be increased.

While this invention has been particularly shown and described with reference to preferred embodiments thereof, it will be understood by those skilled in the art that various changes in form and details may be made therein without departing from the scope of the invention as defined by the appended claims. Therefore, the above-described embodiments will be considered not in restrictive sense but in descriptive sense only. The scope of the invention will be defined not by the above description but by the appended claims, and it will be construed that all differences made within the scope defined by the claims are included in the present invention.

## Claims

1. An apparatus for communication with a remote station in a hybrid fiber-radio system, the apparatus comprising:

   a radio frequency source unit (11) for generating a radio frequency source signal;
   a master laser (12) for converting the radio frequency source signal into a radio source optical signal;
   a local oscillator (13) for generating an intermediate frequency signal;
   a quadrature phase shift keying (QPSK) modulator (14) for converting user source data into a QPSK modulated signal;
   a mixer (15) for mixing the intermediate frequency signal and the QPSK modulated signal;
   a laser (16) for converting the mixed signal into a data mode optical signal; and
   a device (17) for transmitting the data mode optical signal to an optical fiber; and
   a light detector (18) for receiving an optical signal;
   **characterised in that;**
   the light detector (18) is arranged to receive an optical signal from the remote station from the optical fiber for duplex communication;
   the laser (16) for outputting a data mode optical signal is a slave laser;
the device (17) for transmitting the data mode optical signal to an optical fiber is a circulator arranged additionally to supply the radio source optical signal to the slave laser;
the slave laser (16) is arranged to convert the radio source optical signal into a non-data mode optical signal; and
the circulator (17) is arranged additionally to supply the non-data mode optical signal to the optical fiber.

2. An apparatus for communication with a central station in a hybrid fiber-radio system, the apparatus comprising:

   an optical-to-electrical converter(21) for converting an optical signal received from an optical fiber and from the central station into an electrical transmission signal;
   a radio transmitter(23) for converting the data mode signal into a radio transmission signal and transmitting the radio transmission signal wirelessly;
   **characterised by**
   a diplexer(22) for dividing the electrical transmission signal into a data mode signal containing user source data and a non-data mode signal containing a radio frequency source signal;
   a radio receiver(24) for converting a wirelessly received signal into an electrical reception signal;
   a mixer(25) for mixing the non-data mode signal and the electrical reception signal; and
   a transmitting laser (26) for converting the mixed signal into an optical signal and transmitting the optical signal to the optical fiber for duplex communication with the central station.

3. A method of duplex communication in a hybrid fiber-radio system, the method comprising the steps of:

   (a) generating a radio frequency source signal in a radio frequency source unit (11);
   (b) converting the radio frequency source signal into a radio source optical signal with a master laser (12);
   (c) generating an intermediate frequency signal in a local oscillator (13);
   (d) converting user source data into a quadrature phase shift keying,QPSK, modulated signal in a QPSK modulator (14);
   (e) mixing the intermediate frequency signal and the QPSK modulated signal in a mixer (15);
   (f) converting the radio source optical signal into a non-data mode optical signal and converting the mixed signal into a data mode optical signal using a laser (16);

(g) transmitting an optical signal composed of the non-data mode optical signal and the data mode optical signal to an optical fiber;

(h) converting the optical signal received from the optical fiber into an electrical transmission signal;

(i) dividing the electrical transmission signal into a data mode signal containing the user source data and a non-data mode signal containing the radio frequency source signal; and

(j) converting the data mode signal into a radio transmission signal and transmitting the radio transmission signal wirelessly;

**characterised in that;**
the light detector (18) is arranged to receive an optical signal from the remote station from the optical fiber for duplex communication;

the laser (16) for outputting a data mode optical signal is a slave laser;

the step (h) of converting the optical signal uses a circulator (17) arranged additionally to supply the radio data source optical signal to the slave laser (16);

the slave laser (16) is arranged to convert the radio data source optical signal into a non-data mode optical signal; and

the circulator (17) is arranged additionally to supply the non-data mode optical signal to the optical fiber.

4. A method of duplex communication in a hybrid fiber-radio system, the method comprising the steps of:

(a) receiving the optical signal from the optical fiber;

(b) converting an optical signal received from an optical fiber into an electrical transmission signal;

(c) dividing the electrical transmission signal into a data mode signal containing user source data and a (d) non-data mode signal containing a radio frequency source signal;

(e) converting the data mode signal into a radio transmission signal and transmitting the radio transmission signal wirelessly;

(f) converting a wirelessly received signal into an electrical reception signal;

(g) mixing the non-data mode signal and the electrical reception signal; and

(h) converting the mixed signal into an optical signal and transmitting the optical signal to the optical fiber.

5. A computer-readable recording medium on which a program for executing the method of claim 3 is recorded.

6. A computer-readable recording medium on which a program for executing the method of claim 4 is recorded.

**Patentansprüche**

1. Vorrichtung für die Kommunikation mit einer Fernstation in einem hybriden Faser-Funksystem, wobei die Vorrichtung Folgendes umfasst:

eine Funkfrequenzquelleinheit (11) zum Erzeugen eines Funkfrequenzquellsignals;

einen Hauptlaser (12) zum Umwandeln des Funkfrequenzquellsignals in ein optisches Funkquellsignal;

einen Lokaloszillator (13) zum Erzeugen eines Zwischenfrequenzsignals;

einen QPSK-(Vierphasenumtast)-Modulator (14) zum Umwandeln von Benutzerquelldaten in ein QPSK-moduliertes Signal;

einen Mixer (15) zum Mischen des Zwischenfrequenzsignals und des QPSK-modulierten Signals;

einen Laser (16) zum Umwandeln des Mischsignals in ein optisches Datenmodensignal; und

ein Gerät (17) zum Senden des optischen Datenmodensignals zu einer Optofaser; und

einen Lichtdetektor (18) zum Empfangen eines Lichtsignals;

**dadurch gekennzeichnet, dass:**

der Lichtdetektor (18) die Aufgabe hat, ein Lichtsignal von der Fernstation von der Optofaser für Duplexkommunikation zu empfangen;

der Laser (16) zum Ausgeben eines optischen Datenmodensignals ein Slave-Laser ist;

das Gerät (17) zum Senden des optischen Datenmodensignals zu einer Optofaser ein Zirkulator ist, der zusätzlich die Aufgabe hat, das optische Funkquellsignal zu dem Slave-Laser zu führen;

der Slave-Laser (16) die Aufgabe hat, das optische Funkquellsignal in ein optisches Nicht-Datenmodensignal umzuwandeln; und

der Zirkulator (17) zusätzlich die Aufgabe hat, das optische Nicht-Datenmodensignal zu der Optofaser zu führen.

2. Vorrichtung für die Kommunikation mit einer Zentralstation in einem hybriden Faser-Funksystem, wobei die Vorrichtung Folgendes umfasst:

einen Optisch-in-elektrisch-Wandler (21) zum Umwandeln eines von einer Optofaser und von der Zentralstation empfangenen Lichtsignals in ein elektrisches Sendesignal;

einen Funksender (23) zum Umwandeln des Datenmodensignals in ein Funksendesignal und zum drahtlosen Senden des Funksendesignals;

**gekennzeichnet durch**

einen Diplexer (22) zum Unterteilen des elektrischen Sendesignals in ein Datenmodensignal, das Benutzerquelldaten enthält, und ein Nicht-Datenmodensignal, das ein Funkfrequenzquellsignal enthält;

einen Funkempfänger (24) zum Umwandeln eines drahtlos empfangenen Signals in ein elektrisches Empfangssignal;

einen Mixer (25) zum Mischen des Nicht-Datenmodensignals und des elektrischen Empfangssignals; und

einen Sendelaser (26) zum Umwandeln des Mischsignals in ein Lichtsignal und zum Senden des Lichtsignals zur Optofaser für Duplexkommunikation mit der Zentralstation.

3. Verfahren für Duplexkommunikation in einem hybriden Faser-Funksystem, wobei das Verfahren die folgenden Schritte beinhaltet:

(a) Erzeugen eines Funkfrequenzquellsignals in eine Funkfrequenzquelleinheit (11);
(b) Umwandeln des Funkfrequenzquellsignals in ein optisches Funkquellsignal mit einem Master-Laser (12);
(c) Erzeugen eines Zwischenfrequenzsignals in einem Lokaloszillator (13);
(d) Umwandeln von Benutzerquelldaten in ein QPSK-(Vierphasenumtast)-moduliertes Signal in einem QPSK-Modulator (14);
(e) Mischen des Zwischenfrequenzsignals und des QPSK-modulierten Signals in einem Mixer (15);
(f) Umwandeln des optischen Funkquellsignals in ein optisches Nicht-Datenmodensignal und Umwandeln des Mischsignals in ein optisches Datenmodensignal mit einem Laser (16);
(g) Senden eines Lichtsignals, das aus dem optischen Nicht-Datenmodensignal und dem optischen Datenmodensignal zusammengesetzt ist, zu einer Optofaser;
(h) Umwandeln des von der Optofaser empfangenen Lichtsignals in ein elektrisches Sendesignal;
(i) Unterteilen des elektrischen Sendesignals in ein die Benutzerquelldaten enthaltendes Datenmodensignal und ein das Funkfrequenzquellsignal enthaltendes Nicht-Datenmodensignal; und
(j) Umwandeln des Datenmodensignals in ein Funksendesignal und drahtloses Senden des Funksendesignals;

**dadurch gekennzeichnet, dass**

der Lichtdetektor (18) so ausgelegt ist, dass er ein Lichtsignal von der Funkstation von der Optofaser für Duplexkommunikation empfängt;

der Laser (16) zum Ausgeben eines optischen Datenmodensignals ein Slave-Laser ist;

Schritt (h) zum Umwandeln des Lichtsignals einen Zirkulator (17) mit der Aufgabe umfasst, zusätzlich das optische Funkdatenquellsignal zum Slave-Laser (16) zu führen;

der Slave-Laser (16) die Aufgabe hat, das optische Funkdatenquellsignal in ein optisches Nicht-Datenmodensignal umzuwandeln; und

der Zirkulator (17) zusätzlich die Aufgabe hat, das optische Nicht-Datenmodensignal zur Optofaser zu führen.

4. Verfahren zur Duplexkommunikation in einem hybriden Faser-Funksystem, wobei das Verfahren die folgenden Schritte beinhaltet:

(a) Empfangen des Lichtsignals von der Optofaser;
(b) Umwandeln eines von einer Optofaser empfangenen Lichtsignals in ein elektrisches Sendesignal;
(c) Unterteilen des elektrischen Sendesignals in ein Benutzerquelldaten enthaltendes Datenmodensignal und (d) ein ein Funkfrequenzquellsignal enthaltendes Nicht-Datenmodensignal;
(e) Umwandeln des Datenmodensignals in ein Funksendesignal und drahtloses Senden des Funksendesignals;
(f) Umwandeln eines drahtlos empfangenen Signals in ein elektrisches Empfangssignal;
(g) Mischen des Nicht-Datenmodensignals und des elektrischen Empfangssignals; und
(h) Umwandeln des Mischsignals in ein Lichtsignal und Senden des Lichtsignals zur Optofaser.

5. Rechnerlesbares Aufzeichnungsmedium, auf dem ein Programm zum Ausführen des Verfahrens von Anspruch 3 aufgezeichnet ist.

6. Rechnerlesbares Aufzeichnungsmedium, auf dem ein Programm zum Ausführen des Verfahrens von Anspruch 4 aufgezeichnet ist.

**Revendications**

1. Appareil pour communiquer avec une station distante dans un système hybride fibre-radio, l'appareil comprenant :

une unité de source de radiofréquence (11) pour générer un signal de source de radiofréquence ;

un laser maître (12) pour convertir le signal de source de radiofréquence en un signal optique de source radio ;

un oscillateur local (13) pour générer un signal de fréquence intermédiaire ;

un modulateur à déplacement de phase en quadrature (QPSK) (14) pour convertir les données de source utilisateur en un signal modulé QPSK ;

un mélangeur (15) pour mélanger le signal de fréquence intermédiaire et le signal modulé QPSK ;

un laser (16) pour convertir le signal mélangé en un signal optique de mode données ; et

un dispositif (17) pour transmettre le signal optique de mode données à une fibre optique ; et

un détecteur de lumière (18) pour recevoir un signal optique ;

**caractérisé en ce que :**

le détecteur de lumière (18) est agencé pour recevoir un signal optique de la station distante par la fibre optique pour communication en duplex ;

le laser (16) servant à émettre un signal optique de mode données est un laser esclave ;

le dispositif (17) pour transmettre le signal optique de mode données à une fibre optique est un circulateur agencé en outre pour fournir le signal optique de source radio au laser esclave ;

le laser esclave (16) est agencé pour convertir le signal optique de source radio en un signal optique de mode non-données; et le circulateur (17) est en outre agencé pour fournir le signal optique de mode non-données à la fibre optique.

**2.** Appareil pour communiquer avec une station centrale dans un système hybride fibre-radio, l'appareil comprenant :

un convertisseur optique-électrique (21) pour convertir un signal optique reçu d'une fibre optique et d'une station centrale en un signal de transmission électrique ;

un émetteur radio (23) pour convertir le signal de mode données en un signal de transmission radio et pour transmettre le signal de transmission radio sans fil ;

**caractérisé par**

un diplexeur (22) pour diviser le signal de transmission électrique en un signal de mode données contenant des données de source utilisateur et un signal de mode non-données contenant un signal de source de radiofréquence ;

un récepteur radio (24) pour convertir un signal reçu sans fil en un signal de réception électrique ;

un mélangeur (25) pour mélanger le signal de mode non-données et le signal de réception électrique ; et

un laser de transmission (26) pour convertir le signal mélangé en un signal optique et pour transmettre le signal optique à la fibre optique pour communication en duplex avec la station centrale.

**3.** Procédé de communication en duplex dans un système hybride fibre-radio, le procédé comprenant les étapes consistant à :

(a) générer un signal de source de radiofréquence dans une unité de source de radiofréquence (11) ;

(b) convertir le signal de source de radiofréquence en un signal optique de source radio avec un laser maître (12) ;

(c) générer un signal de fréquence intermédiaire dans un oscillateur local (13) ;

(d) convertir les données de source utilisateur en un signal modulé à déplacement de phase en quadrature, QPSK, dans un modulateur QPSK (14) ;

(e) mélanger le signal de fréquence intermédiaire et le signal modulé QSPK dans un mélangeur (15) ;

(f) convertir le signal optique de source radio en un signal optique de mode non-données et convertir le signal mélangé en un signal optique de mode données au moyen d'un laser (16) ;

(g) transmettre un signal optique composé du signal optique de mode non-données et du signal optique de mode données à une fibre optique ;

(h) convertir le signal optique reçu de la fibre optique en un signal de transmission électrique ;

(i) diviser le signal de transmission électrique en un signal de mode données contenant les données de source utilisateur et un signal de mode non-données contenant le signal de source de radiofréquence ; et

(j) convertir le signal de mode données en un signal de transmission radio et transmettre le signal de transmission radio sans fil ;

**caractérisé en ce que :**

le détecteur de lumière (18) est agencé pour recevoir un signal optique de la station distante sur la fibre optique pour communication en duplex ;

le laser (16) pour émettre un signal optique de mode données est un laser esclave ;

l'étape (h) de conversion du signal optique utilise un circulateur (17) agencé en outre pour fournir le signal optique de source de données radio au laser esclave (16) ; le laser esclave (16) est agencé pour convertir le signal optique de source de données radio en un signal optique de mode non-données ; et le circulateur (17) est en outre agencé pour fournir le signal optique de mode non-données à la fibre optique.

4. Procédé de communication en duplex dans un système hybride fibre-radio, le procédé comprenant les étapes consistant à :

(a) recevoir le signal optique de la fibre optique ;
(b) convertir un signal optique reçu d'une fibre optique en un signal de transmission électrique ;
(c) diviser le signal de transmission électrique en un signal de mode données contenant des données de source utilisateur et un (d) signal de mode non-données contenant un signal de source de radiofréquence ;
(e) convertir le signal de mode données en un signal de transmission radio et transmettre le signal de transmission radio sans fil ;
(f) convertir un signal reçu sans fil en un signal de réception électrique ;
(g) mélanger le signal de mode non-données et le signal de réception électrique ; et
(h) convertir le signal mélangé en un signal optique et transmettre le signal optique à la fibre optique.

5. Support d'enregistrement lisible par un ordinateur, sur lequel est enregistré un programme pour exécuter le procédé de la revendication 3.

6. Support d'enregistrement lisible par un ordinateur, sur lequel est enregistré un programme pour exécuter le procédé de la revendication 4.

FIG. 1

# FIG. 2

EP 1 357 683 B1

# FIG. 3

```
      ┌─ 301                      ┌─ 303            ┌─ 304
┌──────────────────────┐   ┌──────────────┐  ┌──────────────────────┐
│      GENERATE        │   │  GENERATE    │  │      GENERATE         │
│  RADIO FREQUENCY     │   │  IF SIGNAL   │  │  QPSK MODULATED       │
│   SOURCE SIGNAL      │   │              │  │     SIGNAL            │
└──────────────────────┘   └──────────────┘  └──────────────────────┘
            │  ┌─ 302                              │  ┌─ 305
            ▼                                      ▼
┌──────────────────────┐              ┌──────────────────────────┐
│ CONVERT RADIO FREQUENCY│            │   MIX IF SIGNAL AND QPSK  │
│ SOURCE SIGNAL INTO OPTICAL│         │     MODULATED SIGNAL      │
└──────────────────────┘              └──────────────────────────┘
            │  ┌─ 306                              │  ┌─ 306
            ▼                                      ▼
┌──────────────────────┐              ┌──────────────────────────┐
│  CONVERT THE OPTICAL SIGNAL│        │   CONVERT THE MIXED SIGNAL │
│    INTO NON-DATA MODE  │            │      INTO DATA MODE       │
│     OPTICAL SIGNAL     │            │      OPTICAL SIGNAL       │
└──────────────────────┘              └──────────────────────────┘
```

┌──────────────────────────────────────┐
│     TRANSMIT NON-DATA MODE            │
│  OPTICAL SIGNAL AND DATA MODE         │── 307
│  OPTICAL SIGNAL TO OPTICAL FIBER      │
└──────────────────────────────────────┘

┌──────────────────────────────────────┐
│   CONVERT OPTICAL SIGNAL INTO         │── 308
│  ELECTRICAL TRANSMISSION SIGNAL       │
└──────────────────────────────────────┘

┌──────────────────────────────────────┐
│  DIVIDE ELECTRICAL TRANSMISSION       │
│   SIGNAL INTO NON-DATA MODE           │── 309
│  SIGNAL AND DATA MODE SIGNAL          │
└──────────────────────────────────────┘

┌──────────────────────────────────────┐
│   CONVERT DATA MODE SIGNAL            │── 310
│  INTO RADIO TRANSMISSION SIGNAL       │
└──────────────────────────────────────┘

(  TRANSMIT  )

# FIG. 4

| | |
|---|---|
| RECEIVE | |
| CONVERT RADIO RECEPTION SIGNAL INTO ELECTRICAL RECEPTION SIGNAL | 401 |
| MIX NON-DATA MODE SIGNAL AND ELECTRICAL RECEPTION SIGNAL | 402 |
| CONVERT MIXED SIGNAL INTO OPTICAL SIGNAL AND TRANSMIT THE OPTICAL SIGNAL TO OPTICAL FIBER | 403 |
| RECEIVE THE OPTICAL SIGNAL FROM THE OPTICAL FIBER | 404 |

# FIG. 5

$f_J$      $f_{SL} - f_{LO}$    $f_{SL}$       $f_{ML}$        $f_I$   $f_I + f_{LO}$

# FIG. 6

| $f_{ML} - f_{SL}$ | $f_I - f_{SL}$ | NON-DATA MODE |
| $(f_{ML} - f_{SL} + f_{LO})$ | $f_I - f_{SL-} + f_{LO}$ | DATA MODE |

FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0845878 A

**Non-patent literature cited in the description**

- **NOEL L et al.** *Electronic Letters,* 1996, vol. 32, 1895-1897